# EUROPEAN PATENT SPECIFICATION

(11) **EP 0 818 948 B1**
(45) Date of publication and mention of the grant of the patent: **03.09.2003**
(21) Application number: 96907224.8
(22) Date of filing: 02.04.1996
(51) Int. Cl.: A01N 25/02, A01N 25/22, A01N 25/32, A01N 61/02

(54) **OIL FOR AGRICULTURAL USE**
ÖL FÜR LANDWIRTSCHAFTLICHE VERWENDUNG
HUILE A USAGE AGRICOLE

(30) Priority: 05.04.1995 AU PN218795
(43) Date of publication of application: 21.01.1998
(73) Proprietor: Caltex Australia Petroleum Pty., Ltd., Sydney, NSW 2000 (AU)
(72) Inventor: HODGKINSON, Mark, Lytton, QLD 4178 (AU)
(74) Representative: Winter, Brandl, Fürniss, Hübner, Röss, Kaiser, Polte Partnerschaft
(86) International application number: AU9600189
(87) International publication number: WO96031120

(56) References cited:
- EP-A- 0 225 580
- EP-A- 0 312 313
- EP-A- 0 376 888
- EP-A- 0 456 198
- AU-A- 1 600 688
- AU-A- 2 243 388
- DE-A- 2 753 183
- DE-A- 4 318 210
- US-A- 3 377 281
- US-A- 3 504 091
- US-A- 3 565 599
- US-A- 4 125 400
- US-A- 4 165 230
- US-A- 4 665 059
- US-A- 5 439 602
- DATABASE WPI Derwent Publications Ltd., London, GB; AN 82-05410J XP002117411 & JP 57 175109 A (HOKKO CHEM IND), 28 October 1982 (1982-10-28)
- DONALD E.H. FREAR: "Chemistry of insecticides, fungicides and herbicides" 1948 , VAN NOSTRAND COMPANY , NEW YORK XP002117410 2nd edition, chapter XII * page 194, paragraph 2 - page 195, paragraph 1 *
- DERWENT ABSTRACT, Accession No. 78671D/43, Class C03; & JP,A,56 115 739, (KURARAY KK), 11 September 1981.

## Description

### FIELD OF THE INVENTION

The present invention relates to an oil for agricultural use, in particular to a petroleum derived spray oil "PSO", being primarily an oil for use as an insecticide and/or an acaricidal control spray oil. More particularly, the invention relates to a PSO having certain additive(s) which reduces the phytotoxicity of the oil in relation to, for example, crops and plants. The invention will be primarily described in relation to its use with refined and semi-refined light oils, but it should be appreciated that the invention has broader application.

### BACKGROUND ART

Petroleum spray oils ("PSO's") are used in agriculture on their own and as carriers or solvents for spraying pesticides, herbicides, micronutrients, chemical adjuvants, etc. The oils are widely used because of their effectiveness in controlling a wide range of pests and diseases, and because of their relatively low cost, relatively low health hazard (including low mammalian toxicity) and wide availability. They also show an absence of residual effect against beneficial predators and parisitoids.

However, certain grades and applications of PSO's have been shown to be phytotoxic, particularly in high dosage applications, or in environments where exposure to sunlight is imminent or intense. Acute phytotoxicity can lead to excessive leaf drop in plants and less obvious chronic symptoms such as inhibition of yield of crops.

There has been much debate in the scientific literature as to the mechanisms of oil induced phytotoxicity, but a primary source of phytotoxicity has been attributed to membrane disruption. Membrane disruption involves the dissolution of folia semipermeable membranes, leading to a breakdown in the plant structure and willing and/or death of the plant. The problem of membrane disruption was largely overcome by improved oil refinement and the instigation of quality criteria.

Phytotoxic effects have been linked with the distillation temperature or viscosity of the particular oil used in spraying. Phytotoxicity has also been attributed to spray oil dose rate and duration of spraying.

However, photodegradation of modern highly refined PSO's with subsequent phytotoxicity has largely been overlooked by researchers and manufacturers in this area.

The formation of acids in PSO's is associated with the photo-degradation (eg. oxidation) of the PSO mediated by UVA radiation. It is now surmised that a contributing or major factor in the phytotoxicity of PSO's could relate to the level of acidity in the PSO when sprayed, or developed after spraying. Even "superior" spray oils (ie. highly refined spray oils), upon exposure to light, may develop acidity and become markedly phytotoxic. This tendency can be enhanced where an oil applied to a plant is exposed to UV radiation (eg. sunlight) for an extended period of time, so that many of the components of the oil are photo-oxidised into organic acids, in turn attacking the plants.

US4125400 discloses an agricultural spray oil including an antioxidant compound. JP57-175109 discloses a purified machine oil including a UV absorber. DS3377281 discloses a lubricating oil including a basic alkaline earth metal sulphonate. EP225580 discloses a lubricating oil composition which includes a copper overbased metal-containing composition. US5439602 discloses an overbased sulphonate combined with petroleum oxidates for metal forming. DS4165230 discloses agricultural spray oils containing zinc dialkyl dithiophosphates. EP312313 discloses an overbased metal sulphonate composition as an additive to a lubricant oil.

It would be advantageous if at least preferred embodiments of the present invention provided an oil for agricultural use, in particular an oil for agricultural spraying, that includes therein a component, or components, capable of preventing the formation of acidic products within the oil, or ameliorating or neutralising their effects.

### SUMMARY OF THE INVENTION

The present invention provides an agricultural spray oil having reduced phytotoxicity when applied to a crop or plant, the oil having added thereto an oil soluble UV absorber that is:
(a) a benzoxazole or benzthiazole compound excluding the compound 2-mercaptobenzothiazole; or
(b) the compound:
   (i) 2-(2H-benztriazole-2-yl)-4-methyl-6-dodecyl phenol; or
   (ii) iso-octyl-3-(3-(2H-benztriazole-2-yl)-5-tert.butyl-4-hydroxyphenyl propionate.

Particular embodiments of the invention are disclosed and claimed in the subclaims.

As described above, exposure of a PSO to UV radiation brings about photo-degradation of the PSO (ie. through the photo-oxidation thereof) into peroxides, acids, esters, polymers etc, thus increasing the phytotoxicity of the PSO. Photooxidation can thus be prevented or ameliorated by the UV absorber compounds. which absorb UV radiation photo-oxidation.

The UV absorber in (i) is commercially available as TINUVIN 171 and is preferably present at 0.005 wf% total of the oil. (TINUVIN 171 is a Trade Mark of Ciba Geigy).

The UV absorber in (ii) is commercially available as TINUVIN 384 (Trade Mark of Ciba Geigy). TINUVIN 171 and 384 are liquid UV absorbers, 384 being of the hydroxyphenyl benztriazole class. TINUVIN 384 has high thermal stability and permanence.

Preferably, the iso-octyl-3-(3-2H-benzotriazole-2-yl)-5-tert.butyl-4-hydroxyphenyl) propionate is present in the range of 0.001-0.5 wt% total of the oil, most preferably at about 0.01 wt% total of the oil.

A preferred oil for use as a PSO is a refined light oil (C₁₃ to C₃₅ length of hydrocarbon chain). In particular, it is preferred that the oil portion of the PSO is a C₁₅ to C₃₅ light paraffinic or light napthenic petroleum derived oil.

Preferably, the light paraffinic or light naphthenic oil is:
(a) chemically neutralised;
(b) clay treated;
(c) solvent refined; or
(d) hydro-treated.

Physical properties of such oils are shown in Tables 2 and 3.

The agricultural spray oil can further include an oil soluble basic compound that is an overbased sulphonate or an overbased phenate. By employing such an oil soluble basic compound, at least some of any acidic compounds present in or formed in the oil in use can be neutralised.

Preferably the overbased sulphonate is a calcium overbased sulphonate. Preferably, the calcium overbased sulphonate is present in the oil in a range 0.01-5 wt% total. It is most preferred that the calcium overbased sulphonate is present in the oil in an amount of about 1.0 wt% total.

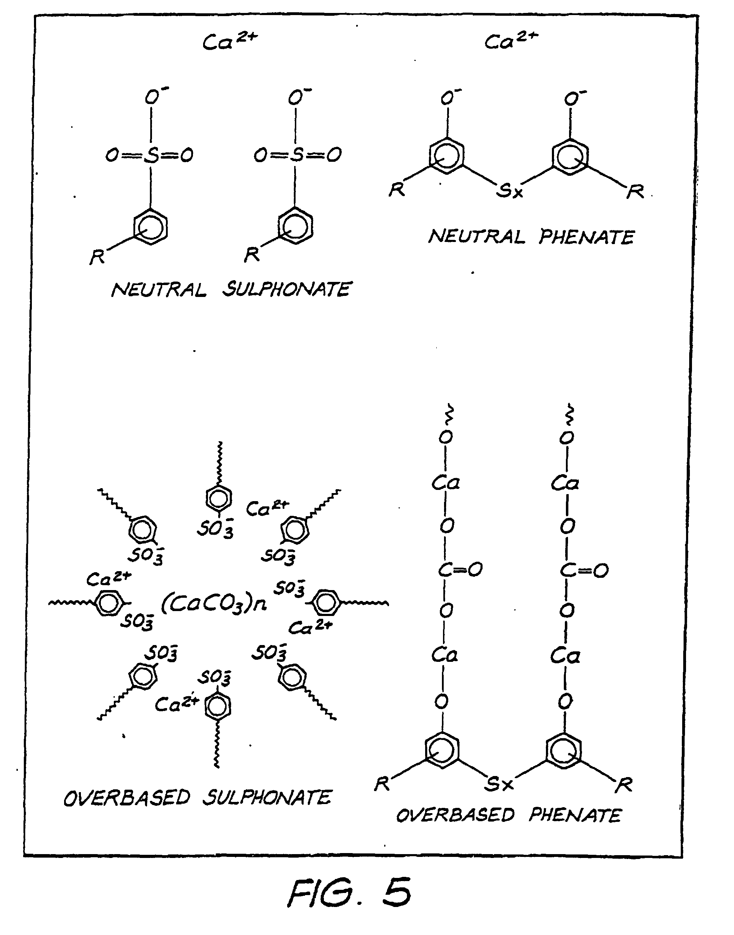

A metal overbased sulphonate includes an aqueous micelle defined by a plurality of relatively long-hydrocarbon chain molecules having a polar head (ie. sulphonate functionality) and a hydrophobic tail (eg. long chain alkyl) and an excess amount of metal base (eg. calcium carbonate) in the micelle. (A depiction of an overbased sulphonate is shown in Figure 5). Metals other than calcium can also be used in the overbased sulphonate or overbased phenate (eg. magnesium overbased sulphonates).

Surfactants are typically added to PSO's to enable the oil to be dispersed in water for subsequent spraying. Typical surfactants include nonionic surfactants. The nonionic surfactants can be added in the range of 0.5 wt% to 20 wt%.

In a most preferred spray oil formulation, a refined light oil can include 0.5 - 20 wt% nonionic surfactant, 1.0 wt% calcium overbased sulphonate and 0.005 wt% benztriazole compound. Thus, preferred formulations may include both a UV absorber and an oil soluble basic compound.

In a further aspect of the present invention an additive composition for an oil for agricultural use is provided which can include a UV absorber(as defined above) and optionally a base (as defined above). This additive composition also includes emulsifying surfactant(s) (such as defined above). The additive composition can be provided separately from the oil (eg. PSO) and can be added to the oil in situ (eg. prior to spraying). The additive composition finds useful application when added to less than ideally refined oils, or oils that are in various stages of oxidation, and can stabilise, eliminate or reduce the phytotoxicity of such oils prior to spraying etc.

### BRIEF DESCRIPTION OF THE DRAWINGS

Preferred forms of the invention will now be described, by way of example, and also in conjunction with the attached Figures in which:
Figure 1 shows the effect of acidity on betacyanin efflux and the control thereof by adding calcium overbased sulphonate to oila (with reference to oils without such addition);
Figures 2 and 4 show the effect of adding a base and UV absorber to different oils when exposed to UV radiation;
Figure 3 shows a fourier transform infra-red carbonyl peak measurement (ie. measurement of acidity) for different oils with base and/or UV absorber added thereto;
Figure 5 depicts schematically typical molecular structures of sulphonates and phenates;
Figure 6 shows schematically the molecular structure of TINUVIN 384; and
Figure 7 shows the transmission spectrum for various solution concentrations of TINUVIN 384 in toluene.

### MODES FOR CARRYING OUT THE INVENTION

Preferred embodiments of the invention will now be described.

### EXAMPLES

A standard nomenclature has been employed throughout the examples for the petroleum spray oils. For example, when a PSO is referred to as a 60N or 70N oil, the number portion refers to and is derived from the measurement of viscosity in Saybolt universal seconds and the term neutral (N) refers to the paraffinic nature of the oil.

When the terminology ASTM and AS is used throughout the specification it is a reference to American Society for Testing and Materials and Australian Standard respectively.

Membrane disruption (and thus phytotoxicity), as referred to in the Figures has been measured by the Betacyanin Efflux Test. The standard test is applied on beetroot tuba disks which have no cuticle and thus the effects of a PSO on the cell membrane can be monitored directly.

### MEMBRANE DISRUPTION BY BETACYANIN EFFLUX FROM UNPROTECTED CELL MEMBRANES

Oil induced disruption of cell membranes unprotected by a cuticle layer was measured by betacyanin efflux from beetroot tuba disks (Coupland, D. et al. (1989). Evaluation of three techniques used'to determine surfactant phytotoxicity; Annals of Applied Biology 115, 147-156). Test material was prepared by making 7 mm diameter disks with a cork borer and cutting them to 1 mm thickness. Preliminary studies showed disks were best used after a two hour rinse in tap water followed by air drying. It was essential to remove absorbed water because water induced premature betacyanin efflux.

Dry disks (n-3) of known fresh weight were added to 10 mL test tubes and completely covered by 2 ml oil. The treatments were then incubated for 3 hours at 30°C when an isotonic solution of 5 ml of 0.4 M sorbitol in deionised water was added. The tubes were set aside to allow betacyanin efflux for 18 hours at 20°C. Analysis of the aqueous layer was performed by colorimetric analysis at 535 nm in 1 cm cells against a solvent blank. Absorbance readings were then normalised to absorbance/disk weight to eliminate differences between disks. This procedure together with the choice of three randomly chosen disks was successful in obtaining reproducible results. Cooking of the disks to produce a maximum efflux for normalisation purposes did not improve the precision.

The pink colour developed by betacyanin efflux conformed to a classical logistic curve when calibrated with oil acidity. The effective dose (ED₅₀) for 3 hours contact was 0.11 mg KOH/g oil (ASTM D927) and the detection limit for no observable effect was 0.08 mg KOH/g oil (0.5 Abs units/g).

In the Figures and Tables, the phytotoxicity of various spray oils, as determined by betacyanin efflux, is shown.

From the tests, it was established that when a membrane disruption value of 0.5 Absorbance Units/g specimen (Abs/g) was exceeded, then damage to the plant would follow. In other words, a result of 0.5 or less is a phyto-safe membrane disruption value.

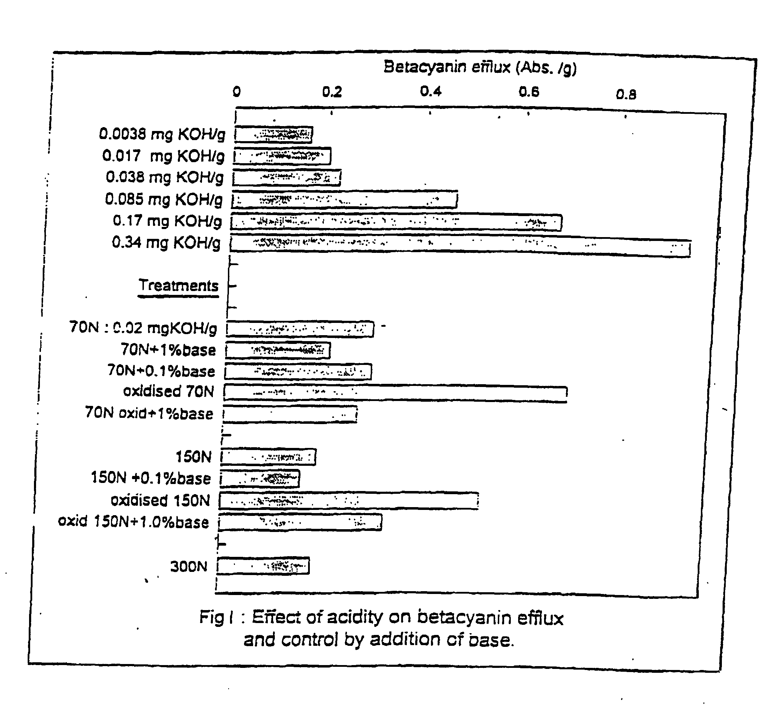

### Example 1 (Figure 1)

various levels of calcium overbased sulphonate, (shown as "base" in Figure 1) were added to 70N and 150N oils, both oxidised and unóxidised. As shown clearly in Figure 1, with the addition of both 0.1% of the base and 1% of the base, the membrane disruption value is held below about 0.4 Abs/g (which is in the phyto-safe zone). Figure 1 also compares these oils against standard oils of different acid values.

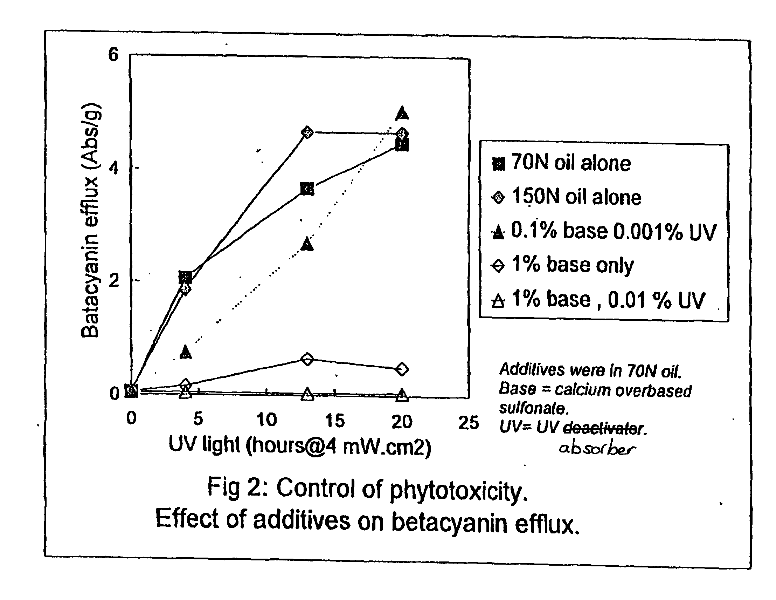

### Example 2 (Figure 2)

A 70N oil had a number of additives (as shown in Figure 2) added thereto. Figure 2 shows the effects of exposing the oil to 4mW of UV radiation/cm² with time, and also indicates the effects of variation in the levels of base (calcium overbased sulphonate) and UV absorber(TINUVIN 384).

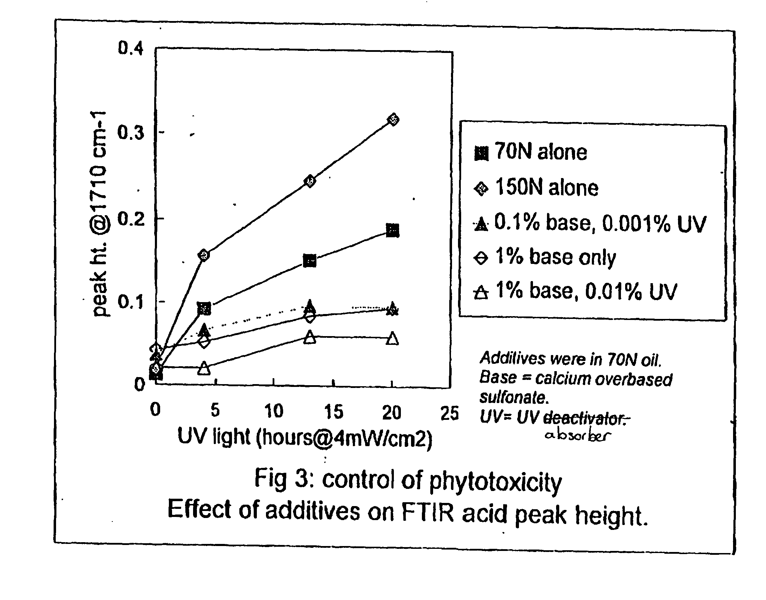

### Example 3 Figure 3)

A 70N oil (with similar additives to Example 3) was exposed to 4mW of UV radiation/cm². Figure 3 shows the results from a fourier transform infra-red spectrum of the oil with time, indicating the variation in acidity between various "treated" and "untreated" oils. From Figure 3, it can be seen that the addition of even a small amount of base and UV absorber minimises the formation of acids (indicated by the carbonyl function, ie. absorbance at 1710 cm-¹).

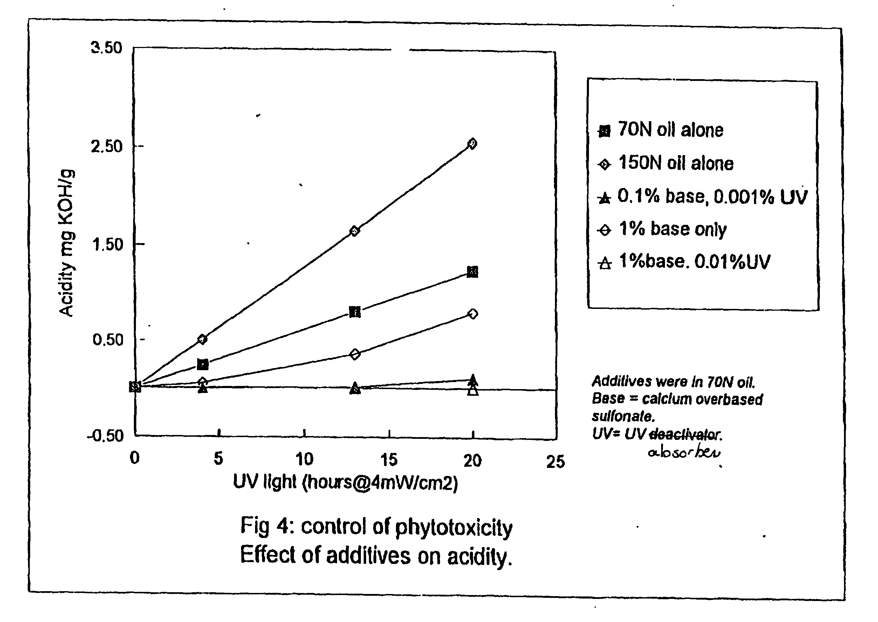

### Example 4 (Figure 4 )

In a similar manner to Example 2, a 70N oil had the additives as referred to in Figure 4 added thereto and was then exposed to UV radiation. The acidity of the resultant oil with time is shown for various combinations of the base and UV absorber, indicating that excellent results are obtained when both a base and a UV deactivator are present.

### Example 5

Additive compositions for use as a separate additive or concentrate pack for addition to oils for agricultural use were prepared. The additive compositions most typically included one or two nonionic surfactants (ie. emulsifying surfactants to render the oil suitable for use as a PSO ( in water)), a UV absorber ( TINUVIN 384) and optionally an oil soluble base ( calcium overbased sulphonate).

An advantage of an additive composition is that it can be added to PSO's in situ (ie. it can be transported in a concentrate form to the user of the PSO, who then adds an appropriate dosage). This means that a local or regional oil can be employed (ie. the treated oil itself does not need to be transported to site) and thus transportation costs can be reduced.

A most preferred additive composition was as follows: Nonionic surfactant (s) plus calcium overbased sulphonate and benztriazole compound in a ratio of 140.5:1, (not including surfactant).

### Example 6

Another preferred formulation for a light petroleum spray oil included 0.5 - 20 wt% nonionic surfactant, 1.0 wt% calcium overbased sulphonate and 0.05 wt% TINUVIN 384.

Table 1 below summarises the photo-degradation performance of various compositions when added to 60 Neutral oil, 70 Neutral oil and 150 Neutral oil, against these oils by themselves. This Table demonstrates the broad applicability of the formulation in different types of oil, and shows that membrane disruption and acidity are considerably reduced or eliminated when such additives are present.

Table 2 shows the typical chemical characteristics of petroleum spray oils suitable for use with the present invention. Table 3 shows some of the properties of a broad range of light spray oils suitable for use in the present invention.

### Figure 5

Figure 5 shows a schematic representation of the typical molecular structures of overbased sulphonates and phenates, wherein the micelle is defined by a plurality of water-soluble polar sulphonate functionality groups (hydrophilic heads) facing inwardly, with each sulphonate head having an oil soluble nonpolar alkyl chain (hydrophobic tail) projecting outwardly therefrom.

The overbased sulphonates contain an excess amount of metal base (eg. calcium carbonate) which neutralises acids formed during photo-degradation of the oils. The alkyl chain length of the sulphonates ranges from 18 to over 20 carbon atoms, whereas the alkyl chain length of the phenates contains approximately 12 carbon atoms.

### Figures 6 and 7

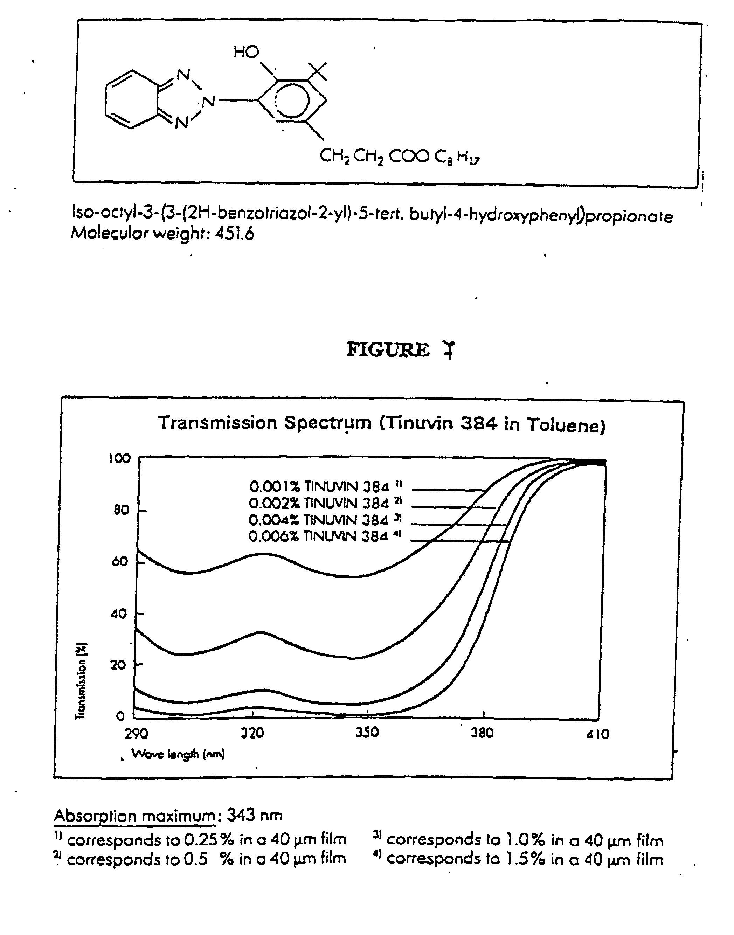

Figure 6 shows the chemical structure of TINUVIN 384 and Figure 7 shows a transmission spectra for various concentrations of TINUVIN in toluene, indicating its preferred usage as a UV absorber.

From the above description, it can be seen that the addition of an oil soluble base and an oil soluble UV deactivator (in various preferred configurations) can eliminate, ameliorate or reduce membrane disruption (as measured by betacyanin efflux) and acidity in petroleum spray oils (resulting from the photo-degradation/photo-oxidation of spray oils in the presence of oxygen and UV radiation), thereby reducing the phytotoxicity of spray oils.

The invention finds application with a wide variety of spray oils, and particularly with less than ideally refined base oils. Thus, by adding a preferred composition to such non-ideally refined spray oils, they can immediately be used thereafter with a reduced risk of phytotoxicity.

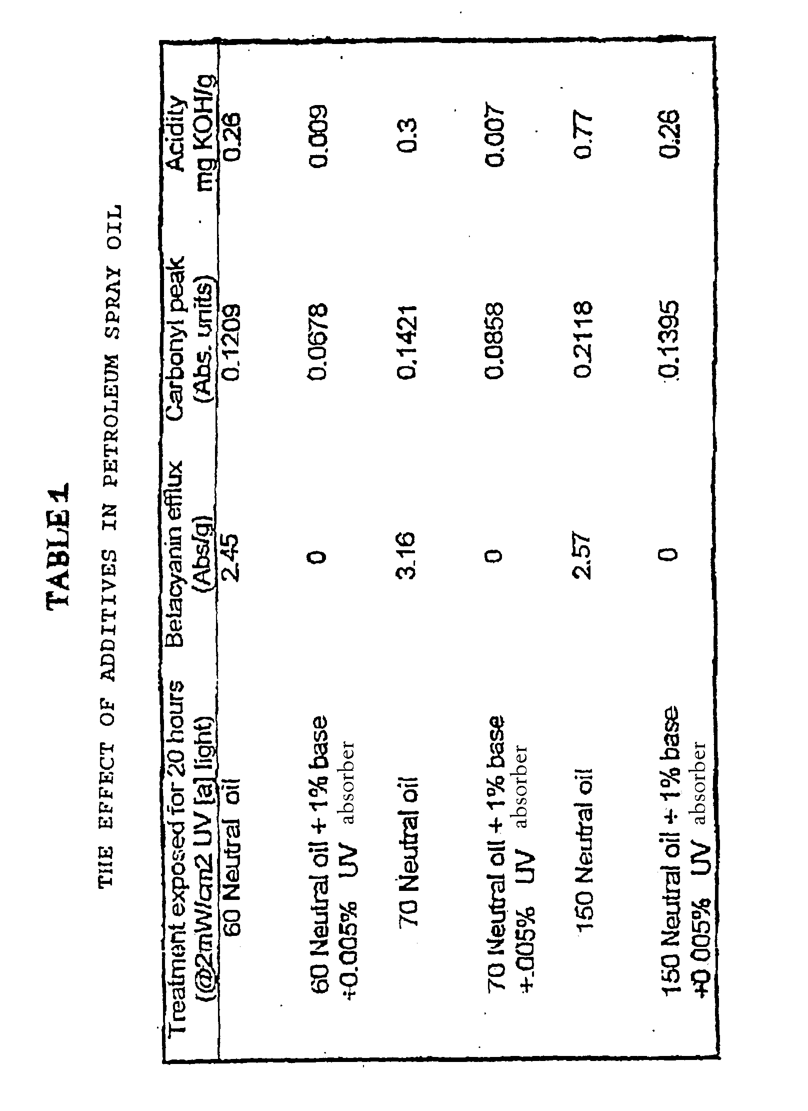

| TYPICAL CHEMICAL CHARACTERISTICS OF PETROLEUM SPRAY OILS | | | | |
|---|---|---|---|---|
| **Analysis** | **Method** | **Typical base oil**^{**A**} | **AS 1888 C21 NRclass**^{**B**} | **AS 1888 C23 NR class**^{**B**} |
| Density @ 15°C | ASTM D1298 (g/mL) | .846 | <0.870 | <0.880 |
| Refractive index @ 20°C | ASTM D1218 | 1.4680 | - | - |
| Viscosity @ 40°C | ASTM D2270 (cSt) | 12 | - | - |
| %UR | ASTM D483 | 94 | >92 | >92 |
| Carbon No. @10%^{C} | Furness et al. 1987 | 20.2 | > 18.2 | > 19.0 |
| Carbon No @50% | " | 23.5 5 | >21 | >22.0 |
| Carbon No. @90% | " | 25.3 | <24.2 | <26.0 |
| 50% DT | ASTM D2887 | 385°C | >357°C | >369°C |
| 50% DT | ASTM D1160 | 231°C | >206°C | >217°C |
| Boiling range | ASTM D2887 | 57°C | <74°C | <81°C |
| %Cp | ASTM D3238 | 70 | - | - |
| %Cn | " | 28 | - | - |
| %Ca | " | 2 | - | - |
| %Aromatic mass | ASTM D2549 | 10 | - | - |

| | | | | |
|---|---|---|---|---|
| A = 70 Neutral | | | | |
| B = Proposed Australian standard [Furness et al. 1987]. These classes equate to the USA "superior " oil grade. | | | | |
| C = Carbon Number when X% mass has distilled. | | | | |
| NR = Narrow Range | | | | |
| %Cp = % carbon atoms as paraffin, n = naphthene, a = aromatic | | | | |
| DT = Distillation temperature (C°: @ 101 kPa ASTM D2887 or 10 kPa ASTM D1160). | | | | |

**TABLE 3**

| **Properties of Oils as Defined by the TSCA Inventory**^{**A**} | | | |
|---|---|---|---|
| CAS name of distillates | CAS No. | Carbon number distribution | Remarks |
| Chemically neutralized light paraffinic | 64742-28-5 | C15-C30 | Contains relatively large proportion of saturates |
| Chemically neutralized light naphthenic | 64742-35-4 | C15-C30 | Few normal paraffins |
| Clay treated light paraffinic | 64742-37-6 | C15-C30 | Mostly saturates |
| Clay treated light naphthenic | 64742-45-6 | C15-C30 | Few normal paraffins |
| Solvent refined light paraffinic | 64741-89-5 | C15-C30 | Predominantly saturates |
| Solvent refined light naphthenic | 64741-97-5 | C15-C30 | Few normal paraffins |
| Hydrotrcated light paraffinic | 64742-55-8 | C15-C30 | Contains a relatively large proportion of saturates |
| Hydrotreated light naphthenic | 64742-53-6 | C15-C30 | Few normal paraffins |

| | | | |
|---|---|---|---|
| A: US EPA (1978); TSCA, US Toxic substances control act. B: CAS number: Chemical abstracts service registry number. | | | |

## Claims

1. An agricultural spray oil having reduced phytotoxicity when applied to a crop or plant, the oil having added thereto an oil soluble UV absorber that is:
(a) a benzoxazole or benzthiazole compound excluding the compound 2-mercaptobenzothiazole;
or
(b) the compound:
(i) 2- (2H-benztriazole-2-yl)-4-methyl-6-dodecyl phenol; or
(ii) iso-octyl-3-(3-(2H-benztriazole-2-yl)-5-tert.butyl-4-hydroxyphenyl propionate.

2. An agricultural spray oi1 as claimed in claim 1 wherein compound (ii) is present in the range of 0.001-0.5 wt% total.

3. An agricultural spray oil as claimed in claim 2, wherein compound (i) is present at about 0.005 wt% total; or compound (ii) is present at about 0.1 wt% total.

4. An agricultural spray oil as claimed in any of claims 1 to 3, wherein the oil portion is a C₁₅ to C₃₅ light paraffinic or light naphthenic petroleum derived oil.

5. An agricultural spray oil as claimed in claim 4, wherein the light paraffinic or light naphthenic oil is:
(a) chemically neutralised;
(b) clay treated;
(c) solvent refined; or
(d) hydro-treated.

6. An agricultural spray oil as claimed in any of claims 1 to 5, further including an oil soluble basic compound that is an overbased sulphonate or an overbased phenate.

7. An agricultural spray oil as claimed in claim 6, wherein the overbased sulphonate is a calcium overbased sulphonate.

8. An agricultural spray oil as claimed in claim 7, wherein the calcium overbased sulphonate is present in the oil in a range of 0.01-5.0 wt% total.

9. An agricultural spray oil as claimed in claim 8, wherein the calcium overbased sulphonate is present in the oil in an amount of about 1.0 wt% total.

10. An agricultural spray oil as claimed in any of the claims 1 to 9, further including emulsifying surfactant(s).

11. An agricultural spray oil as claimed in claim 10, wherein the surfactant(s) are nonionic surfactant(s) and are added at about 0.5 wt% to 20.0 wt% total of the oil.

12. An additive composition for an agricultural spray oil, the composition including an UV absorber as defined in any one of claims 1 to 3 and emulsifying surfactant(s).

13. An additive composition as claimed in claim 12 further including an oil soluble basic compound as defined in any one of claims 6 to 9.

14. An additive composition as claimed in claim 12 or claim 13 which is added to an oil as defined in claim 4 or claim 5.

15. An additive composition as claimed in any one of claims 12 to 14 wherein the emulsifying surfactant(s) are as defined in claim 11.

16. Use of an agricultural spray oil, the oil having added thereto an oil soluble UV absorber that is:
(a) a benzoxazole or benzthiazole compound;
or
(b) the compound:
(i) 2- (2H-benztriazole-2-yl)-4-methyl-6-dodecyl phenol; or
(ii) iso-octyl-3-(3-(2H-benztriazole-2-yl)-5-tert.butyl-4-hydroxyphenyl propionate
as an UV absorber having reduced phytotoxicity when applied to a crop or plant.

17. Use of an agricultural spray oil as claimed in claim 16, wherein the oil portion is a C₁₅ to C₃₅ light paraffinic or light naphthenic petroleum derived oil.

18. Use of an agricultural spray oil as claimed in claim 16 or 17, wherein the light paraffinic or light naphthenic oil is:
(a) chemically neutralised;
(b) clay treated;
(c) solvent refined; or
(d) hydro-treated.

19. Use of an agricultural spray oil as claimed in any of claims 16 to 18, further including an oil soluble basic compound that is an overbased sulphonate or an overbased phenate.

20. Use of an agricultural spray oil as claimed in claim 19, wherein the overbased sulphonate is a calcium overbased sulphonate.

21. Use of an agricultural spray oil as claimed in claim 20, wherein the calcium overbased sulphonate is present in the oil in a range of 0.01-5.0 wt% total.

22. Use of an agricultural spray oil as claimed in claim 21, wherein the calcium overbased sulphonate is present in the oil in an amount of about 1.0 wt% total.

23. Use of an agricultural spray oil as claimed in any of claims 16 to 22, further including emulsifying surfactant(s).

24. Use of an agricultural spray oil as claimed in claim 23, wherein the surfactant(s) are nonionic surfactant(s) and are added at about 0.5 wt% to 20.0 wt% total of the oil.

## Patentansprüche

1. Ein landwirtschaftliches Sprayöl mit reduzierter Phytotoxyzität wenn es auf Anbaupflanzen oder Pflanzen angewendet wird, wobei zu dem Öl ein öllöslicher UV-Absorber hinzugefügt ist, der:
(a) eine Benzoxazol- oder Benzthiazolverbindung außer der Verbindung 2-Mercaptobenzothiazol ist; oder
(b) die Verbindung:
(i) 2-(2H-Benztriazol-2-yl)-4-methyl-6-dodecylphenol ist; oder
(ii) Iso-octyl-3-(3-(2H-benztriazol-2-yl)-5-tertbutyl-4-hydroxyphenylpropionat ist.

2. Ein landwirtschaftliches Sprayöl nach Anspruch 1, wobei die Verbindung (ii) in einer Gesamtmenge im Bereich von 0,001-0,5 Gew.-% vorhanden ist.

3. Ein landwirtschaftliches Sprayöl nach Anspruch 2 wobei die Verbindung (i) in einer Gesamtmenge von etwa 0,005 Gew.-% vorhanden ist; oder die Verbindung (ii) in einer Gesamtmenge von etwa 0,1 Gew.-% vorhanden ist.

4. Ein landwirtschaftliches Sprayöl nach einem der Ansprüche 1 bis 3, wobei der Ölteil ein C₁₅-C₃₅ leichtes paraffines oder ein leichtes naphtenisches vom Petroleum abgeleitetes Öl ist.

5. Ein landwirtschaftliches Sprayöl nach Anspruh 4, wobei das leichte paraffine oder leichte naphthenische Öl
(a) chemisch neutralisiert ist;
(b) lehmbehandelt ist;
(c) lösungsmittelveredelt ist; oder
(d) hydrobehandelt ist.

6. Ein landwirtschaftliches Sprayöl wie beansprucht in jedem der Ansprüche 1 bis 5, weiterhin enthaltend eine öllösliche basische Verbindung, die ein überalkalisiertes Sulphonat oder ein überalkalisiertes Phenat ist.

7. Ein landwirtschaftliches Sprayöl nach Anspruch 6, wobei das überalkalisierte Sulphonat ein kalziumüberalkalisiertes Sulphonat ist.

8. Ein landwirtschaftliches Sprayöl nach Anspruch 7, wobei das kalziumüberalkalisierte Sulphonat in dem Öl in einer Gesamtmenge im Bereich von 0,01 bis 5,0 Gew.-% vorhanden ist.

9. Ein landwirtschaftliches Sprayöl nach Anspruch 8, wobei das kalziumüberalkalisierte Sulphonat in dem Öl in einer Gesamtmenge von etwa 1,0 Gew.-% vorhanden ist.

10. Ein landwirtschaftliches Sprayöl nach einem der Ansprüche 1 bis 9, weiterhin enthaltend einen oder mehrere emulgierende oberflächenaktive Stoffe.

11. Ein landwirtschaftliches Sprayöl nach Anspruch 10, wobei der oberflächenaktive Stoff/die oberflächenaktiven Stoffe ein nicht-ionischer/nicht ionische oberflächenaktive(r) Stoff(e) sind/ist und in einer Gesamtmenge von etwa 0,5 Gew.-% bis 20 Gew.-% des Öls hinzugefügt werden/wird.

12. Eine Additivzusammensetzung für ein landwirtschaftliches Sprayöl, wobei die Zuammensetzung einen UV-Absorber wie definiert in einem der Ansprüche 1 bis 3 und einen oder mehrere emulgierende oberflächenaktive Stoffe enthält.

13. Eine Additivzusammensetzung nach Anspruch 12, weiterhin enthaltend eine öllösliche basische Verbindung wie definiert in einem der Ansprüche 6 bis 9.

14. Eine Additivzusammensetzung nach Anspruch 12 oder 13, welche zu einem Öl wie definiert in Anspruch 4 oder 5 hinzugegeben wird.

15. Eine Additivzusammensetzung nach einem der Ansprüche 12 bis 14, wobei der/die emulgierende(n) oberflächenaktive Stoff(e) ist/sind wie in Anspruch 11 definiert.

16. Die Verwendung eines landwirtschaftlichen Sprayöls, wobei zu dem Öl ein öllöslicher UV-Absorber hinzugeben ist, der
(a) ein Benzoxazol- oder eine Benzthiazolverbindung ist, oder
(b) die Verbindung:
(i) 2-(2H-Benztriazol-2-yl)-4-methyl-6-dodecylphenol ist; oder
(ii) Iso-octyl-3-(3-(2H-benztriazol-2-yl)-5-tert-butyl-4-hydroxyphenylpropionat ist,
als ein UV Absorber mit reduzierter Phytotoxizität, wenn er auf eine Anbaupflanze oder eine Pflanze angewendet wird.

17. Die Verwendung eines landwirtschaftlichen Sprayöls nach Anspruch 16, wobei der Ölteil ein C₁₅ bis C₃₅ leichtes paraffines oder leicht naphthenisches vom Petroleum abgeleitetes Öl ist.

18. Die Verwendung eines landwirtschaftlichen Sprayöls nach Anspruch 16 oder 17, wobei das leichte paraffine oder das leichte naphthenische Öl:
(a) chemisch neutralisiert ist;
(b) lehmbehandelt ist;
(c) lösungsmittelverfeinert ist; oder
(d) hydrobehandelt ist.

19. Die Verwendung eines landwirtschaftlichen Sprayöls nach einem der Ansprüche 16 bis 18, weiterhin enthaltend eine öllösliche basische Verbindung, die ein überalkalisiertes Sulphonat oder ein überalkalisiertes Phenat ist.

20. Die Verwendung eines landwirtschaftlichen Sprayöls nach Anspruch 19, wobei das überalkalisierte Sulphonat ein kalziumüberalkalisiertes Sulphonat ist.

21. Die Verwendung eines landwirtschaftlichen Sprayöls nach Anspruch 20, wobei das kalziumüberalkalisierte Sulphonat in dem Öl in einer Gesamtmenge im Bereich von 0,01 bis 5,0 Gew.-% vorhanden ist.

22. Die Verwendung eines landwirtschaftlichen Sprayöls nach Anspruch 21, wobei das kalziumüberalkalisierte Sulphonat in dem Öl in einer Gesamtmenge von etwa 1,0 Gew.-% vorhanden ist.

23. Die Verwendung eines landwirtschaftlichen Sprayöls nach einem der Ansprüche 16 bis 22, weiterhin enthaltend einen oder mehrere emulgierende oberflächenaktive Stoffe.

24. Die Verwendung eines landwirtschaftlichen Sprayöls nach Anspruch 23, wobei der oberflächenaktive Stoff/die oberflächenaktive Stoffe ein nicht-ionischer oberflächenaktive Stoff ist/nicht-ionische oberflächenaktive Stoffe sind, und in einer Gesamtmenge von etwa 0,5 Gew.-% des Öls hinzugefügt wird/werden.

## Revendications

1. Huile à pulvériser agricole ayant une phytotoxicité réduite quand elle est appliquée sur une culture ou une plante, huile à laquelle est ajouté un agent absorbant les UV liposoluble qui est :
(a) un composé benzoxazole ou benzthiazole excluant le composé 2-mercaptobenzothiazole ; ou
(b) le composé :
(i) 2-(2H-benztriazole-2-yl)-4-méthyl-6-dodécylphénol ; ou
(ii) propionate d'iso-octyl-3-(3-(2H-benztriazole-2-yl)-5-tert.butyl-4-hydroxyphényle.

2. Huile à pulvériser agricole selon la revendication 1, dans laquelle le composé (ii) est présent à raison de 0,001% à 0,5% en poids par rapport au poids total.

3. Huile à pulvériser agricole selon la revendication 2, dans laquelle le composé (i) est présent à raison d'environ 0,005% en poids par rapport au poids total ; ou le composé (ii) est présent à raison d'environ 0,1% en poids par rapport au poids total.

4. Huile à pulvériser agricole selon l'une quelconque des revendications 1 à 3, dans laquelle la partie huileuse est une huile dérivée de pétrole naphténique léger ou paraffinique léger en C₁₅ à C₃₅.

5. Huile à pulvériser agricole selon la revendication 4, dans laquelle l'huile naphténique légère ou paraffinique légère est :
(a) chimiquement neutralisée ;
(b) traitée à l'argile ;
(c) raffinée au solvant ; ou
(d) hydrotraitée.

6. Huile à pulvériser agricole selon l'une quelconque des revendications 1 à 5, comprenant en outre un composé basique liposoluble qui est un sulfonate surbasifié ou un phénate surbasifié.

7. Huile à pulvériser agricole selon la revendication 6, dans laquelle le sulfonate surbasifié est un sulfonate de calcium surbasifié.

8. Huile à pulvériser agricole selon la revendication 7, dans laquelle le sulfonate de calcium surbasifié est présent dans l'huile à raison de 0,01% à 5,0% en poids par rapport au poids total.

9. Huile à pulvériser agricole selon la revendication 8, dans laquelle le sulfonate de calcium surbasifié est présent dans l'huile à raison d'environ 1,0% en poids par rapport au poids total.

10. Huile à pulvériser agricole selon l'une quelconque des revendications 1 à 9, comprenant en outre un ou plusieurs tensio-actifs émulsifiants.

11. Huile à pulvériser agricole selon la revendication 10, dans laquelle le ou les tensio-actifs sont un ou des tensio-actifs non ioniques et sont ajoutés à raison d'environ 0,5% en poids à 20,0% en poids par rapport au poids total de l'huile.

12. Composition d'additifs pour huile à pulvériser agricole, cette composition comprenant un agent absorbant les UV tel que défini dans l'une quelconque des revendications 1 à 3 et un ou plusieurs tensio-actifs émulsifiants.

13. Composition d'additifs selon la revendication 12, comprenant en outre un composé basique liposoluble tel que défini dans l'une quelconque des revendications 6 à 9.

14. Composition d'additifs selon la revendication 12 ou 13, qui est ajoutée à une huile telle que définie dans la revendication 4 ou 5.

15. Composition d'additifs selon l'une quelconque des revendications 12 à 14, dans laquelle le ou les tensio-actifs émulsifiants sont tels que définis dans la revendication 11.

16. Utilisation d'une huile à pulvériser agricole, huile à laquelle est ajouté un agent absorbant les UV liposoluble qui est :
(a) un composé benzoxazole ou benzthiazole ; ou
(b) le composé :
(i) 2-(2H-benztriazole-2-yl)-4-méthyl-6-dodécylphénol ; ou
(ii) propionate d'iso-octyl-3-(3-(2H-benztriazole-2-yl) -5-tert.butyl-4-hydroxyphényle ;
en tant qu'agent absorbant les UV, ayant une phytotoxicité réduite quand elle est appliquée sur une culture ou une plante.

17. Utilisation d'une huile à pulvériser agricole selon la revendication 16, dans laquelle la partie huileuse est une huile dérivée de pétrole naphténique léger ou paraffinique léger en C₁₅ à C₃₅.

18. Utilisation d'une huile à pulvériser agricole selon la revendication 16 ou 17, dans laquelle l'huile naphténique légère ou paraffinique légère est :
(a) chimiquement neutralisée ;
(b) traitée à l'argile ;
(c) raffinée au solvant ; ou
(d) hydrotraitée.

19. Utilisation d'une huile à pulvériser agricole selon l'une quelconque des revendications 16 à 18, comprenant en outre un composé basique liposoluble qui est un sulfonate surbasifié ou un phénate surbasifié.

20. Utilisation d'une huile à pulvériser agricole selon la revendication 19, dans laquelle le sulfonate surbasifié est un sulfonate de calcium surbasifié.

21. Utilisation d'une huile à pulvériser agricole selon la revendication 20, dans laquelle le sulfonate de calcium surbasifié est présent dans l'huile à raison de 0,01% à 5,0% en poids par rapport au poids total.

22. Utilisation d'une huile à pulvériser agricole selon la revendication 21, dans laquelle le sulfonate de calcium surbasifié est présent dans l'huile à raison d'environ 1,0% en poids par rapport au poids total.

23. Utilisation d'une huile à pulvériser agricole selon l'une quelconque des revendications 16 à 22, comprenant en outre un ou plusieurs tensio-actifs émulsifiants.

24. Utilisation d'une huile à pulvériser agricole selon la revendication 23, dans laquelle le ou les tensio-actifs sont un ou des tensio-actifs non ioniques et sont ajoutés à raison d'environ 0,5% en poids à 20,0% en poids par rapport au poids total de l'huile.
